# FASCICULE DE BREVET EUROPEEN

(11) **EP 1 437 269 B1**
(45) Date de publication et mention de la délivrance du brevet: **18.04.2007**
(21) Numéro de dépôt: 04075127.3
(22) Date de dépôt: 03.12.2002
(51) Int. Cl.: B60R 21/34, B62D 25/10

(54) **Dispositif de protection des pietons en cas de choc frontal avec un vehicule automobile**
Schutzvorrichtung für Fussgänger im Falle eines frontalen Zusammenstosses mit einem Kraftfahrzeug
Device for protection of pedestrians in the event of frontal crash with a motor vehicle

(30) Priorité: 12.12.2001 FR 0116016; 12.12.2001 FR 0116017; 19.07.2002 FR 0209191
(43) Date de publication de la demande: 14.07.2004
(62) Demande divisionnaire de: 02292968.1
(73) Titulaire: Peugeot Citroën Automobiles S.A., 78140 Vélizy Villacoublay (FR)
(72) Inventeur: Clement, Daniel, 78170 La Celle Saint Cloud (FR); Marcuzzi, Jean-Charles, 95100 Argenteuil (FR)
(74) Mandataire: Robert, Jean-François

(56) Documents cités:
- WO-A-01/23226
- DE-A- 19 712 961
- JP-A- 58 221 773
- JP-A- 59 156 872

## Description

La présente invention concerne un dispositif de protection des piétons en cas de choc frontal avec un véhicule automobile.

Elle se rapporte plus particulièrement à un véhicule comportant un capot articulé dans sa partie arrière sur la structure du véhicule, de façon que son ouverture s'effectue par l'avant, ce capot étant relié dans sa partie arrière à la structure du véhicule par des moyens de liaison aptes à être commandés pour élever cette partie arrière du capot afin de diminuer la gravité des chocs du piéton sur le capot, notamment au niveau de la tête.

En cas de choc frontal d'un véhicule avec un piéton, la tête du piéton vient, en général, heurter violemment le capot. Lors de l'impact de la tête du piéton sur le capot, il se produit un enfoncement du capot jusqu'à un impact éventuel avec des éléments rigides situés sous le capot tels que la batterie, des éléments porteurs... De même, il peut se produire un impact direct avec des zones rigides du capot. Ces impacts contre les éléments rigides constituent la cause principale des décès ou des blessures graves des piétons renversés.

On connaît des dispositifs de protection des piétons comprenant des moyens d'élévation de la partie arrière du capot, cette élévation s'accompagnant d'une rotation du capot autour de la serrure du mécanisme d'ouverture du capot, située en partie avant du capot, tandis que l'articulation ou charnière située en partie arrière est généralement directement supportée par les moyens d'élévation. De cette façon, l'activation des moyens d'élévation imprime à la charnière un mouvement vers le haut, qui entraîne dans sa course le capot.

Certaines architectures de véhicule ne permettent pas d'adopter un tel dispositif, en raison de la position particulière de l'articulation par rapport au capot et à la structure du véhicule. Ce sera notamment le cas des véhicules à pare-brise relativement long et plongeant et dont la partie inférieure des montants de baie est située au devant de l'axe d'articulation du capot. Dans de tels véhicules, l'articulation du capot sur la structure du véhicule est généralement réalisée au moyen de deux bras longitudinaux prolongeant le capot sur chacun de ses côtés vers l'arrière du véhicule jusqu'à un axe d'articulation situé à l'arrière des extrémités inférieures des montants de baie latéraux, dans une zone offrant un volume d'implantation extrêmement réduit. D'une façon générale, les véhicules offrant un volume d'implantation réduit autour de l'articulation du capot permettent difficilement de disposer cette articulation directement sur des moyens d'élévation du Capot.

On connaît également par le document WO 01/23226 A un dispositif de protection des piétons selon le préambule de la revendication 1 comprenant des moyens d'élévation de la partie arrière du capot, le capot étant prolongé dans sa partie arrière par un bras porteur monté à rotation sur la structure du véhicule autour d'un axe principal d'articulation. Les moyens d'élévation du capot nécessitent des moyens supplémentaires aux moyens de liaison du capot, notamment un airbag. De plus, le dispositif de protection des piétons selon ce document ne fait pas référence à une architecture particulière du véhicule.

Le but de la présente invention est de pallier les inconvénients précédents en proposant un dispositif de protection des piétons particulièrement adapté aux véhicules présentant des contraintes architecturales et/ou d'implantation affectant l'articulation du capot et les zones adjacentes du véhicule.

A cet effet, la présente invention concerne un dispositif de protection des piétons en cas de choc frontal avec un véhicule automobile, ce dernier comportant un capot prolongé dans sa partie arrière par au moins un bras porteur monté à rotation sur la structure du véhicule autour d'un axe principal perpendiculaire à la direction longitudinale du véhicule, des moyens de liaison assurant la fixation du capot sur une portion avant du bras porteur, les moyens de liaison pouvant être commandés électriquement, de façon à se présenter sélectivement dans un état passif de protection, dans lequel les degrés de liberté entre le capot et le bras porteur sont nuls, ou dans un état actif de protection dans lequel lesdits moyens de liaison provoquent une rotation du capot par rapport au bras porteur autour d'un axe secondaire sensiblement parallèle à l'axe principal et situé à distance de ce dernier vers l'avant du véhicule, tandis que l'axe principal est situé à l'arrière des extrémités inférieures des montants de baie latéraux du véhicule.

On en déduit que très avantageusement, les moyens de liaison assurant l'élévation du capot coopèrent directement avec le capot d'une part et avec le bras porteur relié à l'articulation du capot autour de l'axe principal d'autre part. Ces moyens de liaison n'étant pas en appui sur la structure du véhicule, l'articulation autour de l'axe principal du capot ne subit aucun déplacement lorsque les moyens de liaison se présentent dans leur état actif de protection. Entre autres avantages, ceci autorise une architecture originale du véhicule, dans laquelle l'axe principal d'articulation du capot est situé très en retrait du bord arrière du capot, à proximité des extrémités inférieures des montants de baie latéraux du véhicule, voire à l'arrière de celles-ci.

Le dispositif de protection des piétons suivant l'invention peut également comporter une ou plusieurs des caractéristiques suivantes :
- les moyens de liaison entre le capot et le bras porteur comprennent un support fixé rigidement au capot et articulé sur une portion avant du bras porteur autour de l'axe secondaire de rotation.
- les moyens de liaison sont conformés de façon à élever l'axe secondaire de rotation lorsqu'ils passent de leur état passif à leur état actif de protection,
- des moyens de verrouillage à désactivation électrique sont interposés entre le support et le bras porteur, de façon à pouvoir sélectivement empêcher ou autoriser le pivotement du bras porteur par rapport au support,
- les moyens de verrouillage sont du type comprenant une goupille de blocage traversant au moins partiellement le support et le bras porteur, ladite goupille étant éjectable par la mise à feu d'une charge pyrotechnique commandée électriquement,
- les moyens de liaison entre le capot et le bras porteur comprennent des moyens d'actionnement interposés entre le support et le bras porteur pour provoquer le pivotement du bras porteur par rapport au support en soulevant la partie arrière du capot, lorsque les moyens de verrouillage sont désactivés,
- les moyens d'actionnement sont constitués d'un ressort hélicoïdal dont les extrémités coopèrent en contrainte avec le bras porteur et le support,
- les moyens d'actionnement sont constitués d'un ressort à lame coopérant en contrainte avec le support et le bras porteur,
- la serrure du mécanisme d'ouverture de la partie avant du capot est conformée pour permettre le déplacement longitudinal et/ou l'abaissement de la partie avant du capot par rapport à la structure du véhicule lors de la rotation du capot autour de l'axe secondaire,
- la serrure du mécanisme d'ouverture de la partie avant du capot comprend un pêne ayant la forme générale d'un crochet apte à emprisonner une gâche ayant la forme générale d'un fil dans un passage délimité par le crochet et éventuellement par un élément adjacent au crochet, ce fil comportant une portion d'accrochage sensiblement longitudinale par rapport au véhicule de façon à pouvoir coulisser dans ledit passage selon cette direction longitudinale, le pêne et la gâche étant respectivement fixés sur la structure et le capot du véhicule ou inversement,
- des moyens de détection d'un choc piéton sont prévus en partie avant du véhicule et communiquent avec des moyens de traitement et de commande des moyens de liaison assurant la fixation du capot sur le bras porteur.

Les caractéristiques de l'invention mentionnées ci-dessus, ainsi que d'autres, apparaîtront plus clairement à la lecture de la description suivante d'un mode de réalisation, en se référant aux dessins annexés sur lesquels :
- la figure 1 est une vue schématique de la partie avant d'un véhicule pourvu d'un capot articulé dans sa partie arrière sur la structure du véhicule,
- la figure 2 est une vue en perspective d'une charnière connue assurant l'articulation du capot sur la structure du véhicule,

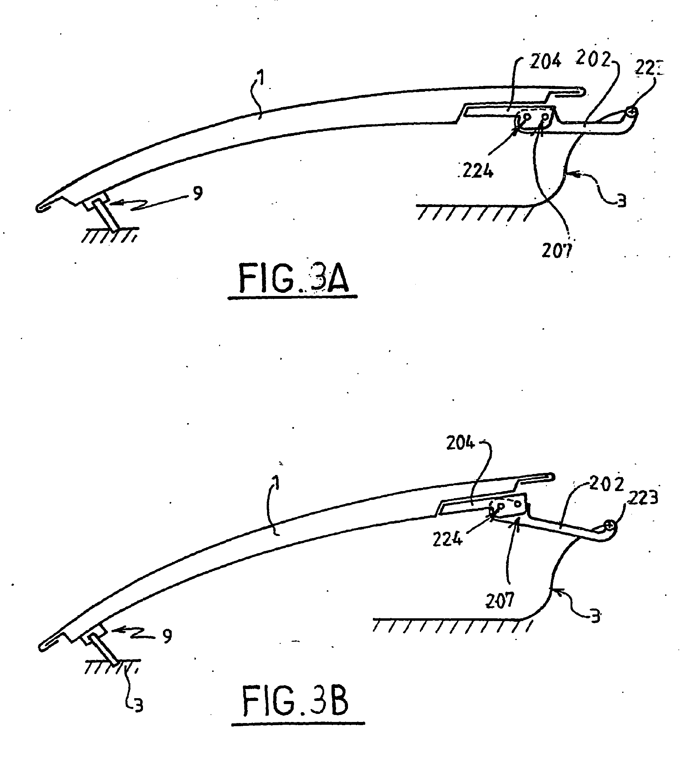

- les figures 3A et 3B sont des vues schématiques d'un capot articulé sur la structure d'un véhicule automobile pourvu d'un dispositif de protection des piétons suivant un troiième mode de réalisation de l'invention, dans lequel les moyens de liaison du capot avec la structure du véhicule sont présentés respectivement dans leur état passif et dans leur état actif de protection,
- la figure 4 est une vue en perspective éclatée d'un détail de réalisation du dispositif de protection des piétons de la figure 3A,
- la figure 5 est une vue schématique de la serrure du mécanisme d'ouverture située en partie avant du capot.

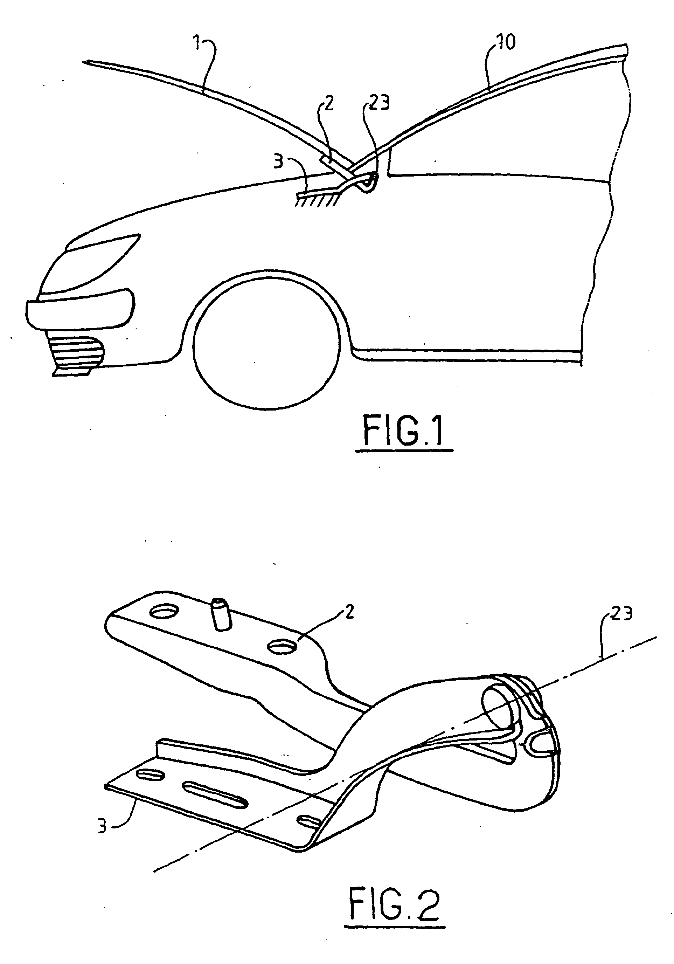

On a représenté à la figure 1 la partie avant d'un véhicule automobile pourvu d'un capot 1 articulé dans sa partie arrière sur la structure 3 d'un véhicule, au moyen de deux charnières de type connu. On notera que l'axe 23 d'articulation du capot 1 sur la structure 3 du véhicule est dirigé transversalement à la direction longitudinale du véhicule et est situé à l'arrière des extrémités inférieures des montants de baie latéraux du véhicule. Ce cas de figure est bien connu, en particulier lorsque le pare-brise du véhicule est relativement long et plongeant.

Une charnière de type connu, adaptée à une telle architecture du véhicule, est représentée à la figure 2. Elle comprend un bras porteur 2 supportant le capot 1, monté pivotant sur un élément fixé rigidement sur la structure 3 du véhicule, autour d'un axe d'articulation 23.

Par souci de clarté dans la description, à chaque fois qu'il sera fait référence à une charnière ou à des moyens de liaison entre le capot 1 et la structure 3 du véhicule, il faudra bien entendu comprendre que cette charnière ou ces moyens de liaison peuvent être disposés de chaque côté du véhicule, de façon symétrique par rapport à ce dernier.

Selon l'invention, des moyens de liaison 202, 204, 205 sont prévus entre le capot 1 et la structure 3 du véhicule. Ceux-ci peuvent comporter des éléments déjà constitutifs d'une charnière de type connu, notamment le bras porteur 2, 202 monté pivotant sur la structure 3 du véhicule, autour d'un axe 23, 223 d'articulation. Pour les besoins de la description, nous désignerons désormais cet axe 23, 223 d'articulation par les termes d'« axe principal d'articulation ».

Ces moyens de liaison 202, 204, 205 sont conformés pour se présenter sélectivement dans un état passif de protection Ep, dans lequel les degrés de liberté entre le capot 1 et le bras porteur 202 sont nuls, ou dans un état actif de protection Ea, dans lequel les moyens de liaison 202, 204, 205 provoquent une rotation du capot 1 par rapport au bras porteur 202 autour d'un axe secondaire 24 sensiblement parallèle à l'axe principal 223 et situé à distance de ce dernier 223 vers l'avant du véhicule.

Un mode de réalisation de l'invention est présenté ci-après.

Les moyens de liaison 202, 204, 205 situés entre le capot 1 et la structure 3 du véhicule peuvent être réalisés de façon extrêmement compacte.

En référence aux figures 9A et 9B, les moyens de liaison 202, 204, 205 entre le capot 1 et le bras porteur 202 peuvent comprendre un support 204 fixé rigidement au capot 1. Ce support 204 est articulé sur une portion avant du bras porteur 202 autour de l'axe secondaire 224 de rotation. La figure 10 illustre en perspective éclatée le support 204 et le bras porteur 202.

Le support 204 constitue un prolongement du bras porteur 202 vers l'avant du véhicule qui demeure fixé rigidement à ce bras porteur 202 lorsque les moyens de liaison 202, 204, 205 sont dans leur état passif de protection Ep. Lorsque ces derniers 202, 204, 205 passent à leur état actif de protection Ea, la fixation rigide est rompue entre le bras porteur 202 et le support 204 au niveau de l'axe secondaire 224.

Des moyens de verrouillage 207 sont interposés entre le support 204 et le bras porteur 202 pour empêcher tout déplacement relatif entre ces éléments 202, 207, c'est à dire toute rotation autour de l'axe secondaire 224, lorsque les moyens de liaison sont dans leur état passif de protection Ep.

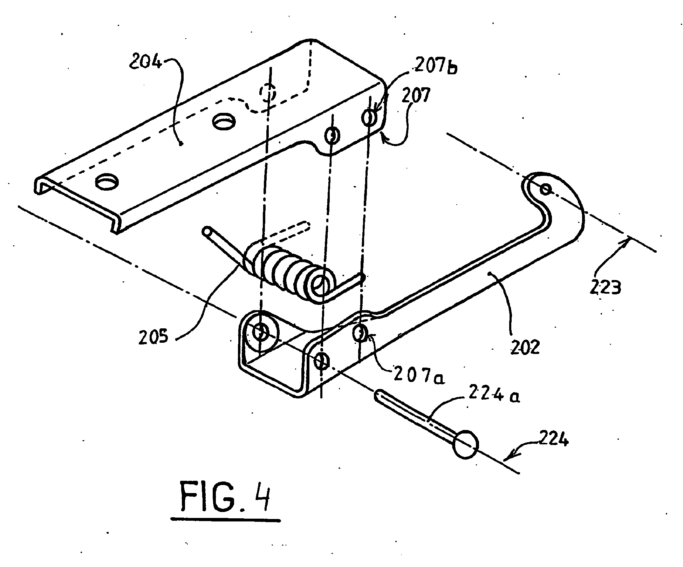

Ces moyens de verrouillage 207 peuvent être disposés sensiblement entre l'axe primaire 223 et l'axe secondaire 224 de rotation. Comme dans le cas des deux premiers modes de réalisation de l'invention, ils peuvent être à désactivation électrique. Une goupille de blocage (non représentée) traverse le support 204 et le bras porteur 202, par des orifices respectifs 207a et 207b (figure 4). Cette goupille est éjectable par la mise à feu d'une charge pyrotechnique commandée électriquement. Ainsi, lorsqu'un signal électrique est envoyé aux moyens de verrouillage 207 pour les désactiver, les moyens de liaison 202, 204, 205 sont autorisés à passer de leur état passif Ep de protection à leur état actif Ea de protection.

Pour provoquer le passage des moyens de liaison 202, 204, 205, de leur état passif Ep à leur état actif Ea de protection, ces moyens de liaison 202, 204, 205 comprennent des moyens d'actionnement 205 interposés entre le support 204 et le bras porteur 202. Plus précisément, ces moyens d'actionnement 205 sont conformés pour provoquer la rotation du support 204 par rapport au bras porteur 202 autour de l'axe secondaire 224 de rotation lorsque les moyens de verrouillage 207 sont désactivés.

Les moyens d'actionnement 205 peuvent être constitués d'un ressort hélicoïdal. Ce ressort peut être un ressort hélicoïdal de torsion, comme cela est visible à la figure 4. Le ressort peut être positionné dans un espace séparant le support 207 et le bras porteur 202, par exemple de façon colinéaire à l'axe secondaire d'articulation 224. Une goupille 224a permettant de réaliser l'articulation selon cet axe 224 peut être enfilée à l'intérieur du ressort de façon à rendre le dispositif extrêmement compact. Les extrémités du ressort 205 sont conformées pour coopérer en contrainte avec d'une part, le bras porteur 202 et d'autre part, le support 204 afin d'écarter ces deux éléments 202, 204 dans leur zone arrière et d'induire une rotation de l'un par rapport à l'autre autour de l'axe secondaire 224 de rotation. L'action du ressort 205 tend ainsi à élever l'axe secondaire 224 de rotation et incidemment la partie arrière du capot 1 par rapport au véhicule, lorsque les moyens de verrouillage 207 sont désactivés.

Ce soulèvement est constaté puisque les moyens de liaison 202, 204, 205 rattachant le capot 1 à la structure 3 du véhicule ne permettent pas d'avancer la partie arrière du capot 1 vers l'avant du véhicule lors de la désactivation des moyens de verrouillage 207. La cinématique des moyens de liaison 202, 204, 205 induit une contraction de ces moyens 202, 204, 205 dans la direction longitudinale du véhicule, se traduisant par une remontée de l'axe secondaire 224 de rotation.

Dans une variante de réalisation de l'invention (non représentée), les moyens d'actionnement sont constitués d'un ressort à lame(s) positionné dans un espace séparant le support 207 et le bras porteur 202. Des flans de ce ressort coopèrent en contrainte avec d'une part, le bras porteur 202 et d'autre part, le support 204 afin d'écarter ces deux éléments 202, 204 dans leur zone arrière et d'induire une rotation de l'un par rapport à l'autre autour de l'axe secondaire 224 de rotation. L'action d'un tel ressort à lame tend ainsi à élever l'axe secondaire 224 de rotation et incidemment la partie arrière du capot 1 par rapport au véhicule, lorsque les moyens de verrouillage 207 sont désactivés. Le ressort à lame(s) peut avoir des formes diverses, par exemple la forme générale d'un C, ou encore d'un S. Il peut comporter une seule lame ou plusieurs lames accolées.

Par ailleurs, dans la partie avant du capot 1, la serrure 9 du mécanisme d'ouverture est conformée pour permettre le déplacement longitudinal et/ou l'abaissement de la partie avant du capot 1 par rapport à la structure 3 du véhicule lors de la rotation du capot 1 autour de l'axe secondaire 24, 124, 224.

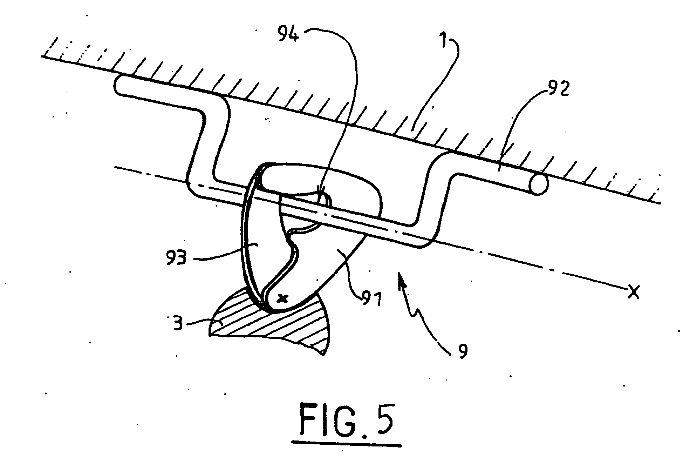

Plus précisément, comme représenté à la figure 5, la serrure 9 comprend un pêne 91 ayant la forme générale d'un crochet apte à emprisonner une gâche 92 ayant la forme générale d'un fil dans un passage 94 délimité par le crochet et éventuellement par un élément adjacent 93 au crochet. Ce fil comporte une portion d'accrochage sensiblement longitudinale par rapport au véhicule de façon à pouvoir coulisser dans ledit passage 94 selon cette direction longitudinale. Comme le montre la figure 8, le pêne 91 et la gâche 92 peuvent être montés respectivement sur la structure 3 et le capot 1 du véhicule. Dans une variante de réalisation (non représenté), le pêne 91 et la gâche 92 peuvent être respectivement solidaires du capot 1 et de la structure 3 du véhicule.

Avantageusement, on comprendra que le dispositif de protection des piétons suivant l'invention est particulièrement adapté aux véhicules offrant un volume d'implantation réduit à proximité de l'articulation du capot sur la structure du véhicule. Le dispositif de l'invention s'avérera notamment très approprié aux véhicules dont l'axe d'articulation du capot est situé à proximité des extrémités inférieures des montants de baie latéraux du véhicule, ou en retrait de celles-ci vers l'arrière du véhicule.

Bien, que l'invention ait été décrite en liaison avec un mode de réalisation particulier, elle comprend tous les équivalents techniques des moyens décrits.

## Revendications

1. Dispositif de protection des piétons en cas de choc frontal avec un véhicule automobile, ce dernier comportant un capot (1) prolongé dans sa partie arrière par au moins un bras porteur (202) monté à rotation sur la structure (3) du véhicule autour d'un axe principal (223) perpendiculaire à la direction longitudinale du véhicule, des moyens de liaison (202, 204, 205) assurant la fixation du capot (1) sur une portion avant du bras porteur (202), **caractérisé en ce que** les moyens de liaison peuvent être commandés électriquement, de façon à se présenter sélectivement dans un état passif de protection (Ep), dans lequel les degrés de liberté entre le capot (1) et le bras porteur (202) sont nuls, ou dans un état actif de protection (Ea) dans lequel lesdits moyens de liaison (202, 204, 205) provoquent une rotation du capot (1) par rapport au bras porteur (202) autour d'un axe secondaire (224) sensiblement parallèle à l'axe principal (223) et situé à distance de ce dernier (223) vers l'avant du véhicule, et **en ce que** l'axe principal (223) est situé à l'arrière des extrémités inférieures des montants de baie latéraux du véhicule.

2. Dispositif de protection des piétons selon la revendication 1, **caractérisé en ce que** les moyens de liaison (202, 204, 205) entre le capot (1) et le bras porteur (202) comprennent un support (204) fixé rigidement au capot (1) et articulé sur une portion avant du bras porteur (202) autour de l'axe secondaire (224) de rotation.

3. Dispositif de protection des piétons selon la revendication 2, les moyens de liaison (202, 204, 205) sont conformés de façon à élever l'axe secondaire (224) de rotation lorsqu'ils passent de leur état passif (Ep) à leur état actif (Ea) de protection,

4. Dispositif de protection des piétons selon la revendication 2 ou 3, **caractérisé en ce que** des moyens de verrouillage (207) à désactivation électrique sont interposés entre le support (204) et le bras porteur (202), de façon à pouvoir sélectivement empêcher ou autoriser le pivotement du bras porteur (202) par rapport au support (204).

5. Dispositif de protection des piétons selon la revendication 4, **caractérisé en ce que** les moyens de verrouillage (207) sont du type comprenant une goupille de blocage traversant au moins partiellement le support (204) et le bras porteur (202), ladite goupille étant éjectable par la mise à feu d'une charge pyrotechnique commandée électriquement.

6. Dispositif de protection des piétons selon la revendication 4 ou 5, **caractérisé en ce que** les moyens de liaison (202, 204, 205) entre le capot (1) et le bras porteur (202) comprennent des moyens d'actionnement (205) interposés entre le support (204) et le bras porteur (202) pour provoquer le pivotement du bras porteur (202) par rapport au support (204), en soulevant la partie arrière du capot (1) lorsque les moyens de verrouillage (207) sont désactivés.

7. Dispositif de protection des piétons selon la revendication 6, **caractérisé en ce que** les moyens d'actionnement sont constitués d'un ressort hélicoïdal dont les extrémités coopèrent en contrainte avec le bras porteur (202) et le support (204).

8. Dispositif de protection des piétons selon la revendication 6, **caractérisé en ce que** les moyens d'actionnement sont constitués d'un ressort à lame coopérant en contrainte avec le support (204) et le bras porteur (202).

9. Dispositif de protection des piétons selon l'une quelconque des revendications précédentes, **caractérisé en ce que** la serrure (9) du mécanisme d'ouverture de la partie avant du capot (1) est conformée pour permettre le déplacement longitudinal et/ou l'abaissement de la partie avant du capot (1) par rapport à la structure (3) du véhicule lors de la rotation du capot (1) autour de l'axe secondaire (224).

10. Dispositif de protection des piétons selon la revendication 9, **caractérisé en ce que** la serrure (9) du mécanisme d'ouverture de la partie avant du capot (1) comprend un pêne (91) ayant la forme générale d'un crochet apte à emprisonner une gâche (92) ayant la forme générale d'un fil dans un passage (94) délimité par le crochet et éventuellement par un élément adjacent (93) au crochet, ce fil comportant une portion d'accrochage sensiblement longitudinale par rapport au véhicule de façon à pouvoir coulisser dans ledit passage (94) selon cette direction longitudinale, le pêne (91) et la gâche (92) étant respectivement fixés sur la structure (3) et le capot (1) du véhicule ou inversement.

11. Dispositif de protection des piétons selon l'une quelconque des revendications précédentes, **caractérisé en ce que** des moyens de détection d'un choc piéton sont prévus en partie avant du véhicule et communiquent avec des moyens de traitement et de commande des moyens de liaison (202, 204, 205) assurant la fixation du capot (1) sur le bras porteur (202).

## Claims

1. Device for protection of pedestrians in the event of a frontal impact with a motor vehicle, the latter comprising a bonnet (1) extended in its rear portion by at least one carrying arm (202) mounted so as to rotate on the structure (3) of the vehicle about a principal axis (223) perpendicular to the longitudinal direction of the vehicle, linking means (202, 204, 205) ensuring the fixing of the bonnet (1) to a front portion of the carrying arm (202), **characterised in that** the linking means can be controlled electrically, so as to be selectively in a passive protection state (Ep), in which the degrees of freedom between the bonnet (1) and the carrying arm (202) are zero, or in an active protection state (Ea) in which said linking means (202, 204, 205) cause a rotation of the bonnet (1) with respect to the carrying arm (202) about a secondary axis (224) substantially parallel to the principal axis (223) and located some distance from the latter (223) towards the front of vehicle, and **in that** the principal axis (223) is located at the rear of the lower ends of the lateral window pillars of the vehicle.

2. Device for protection of pedestrians according to Claim 1, **characterised in that** the linking means (202, 204, 205) between the bonnet (1) and the carrying arm (202) comprise a support (204) fixed rigidly to the bonnet (1) and articulated on a front portion of the carrying arm (202) about the secondary axis (224) of rotation.

3. Device for protection of pedestrians according to Claim 2, the linking means (202, 204, 205) are shaped so as to raise the secondary axis (224) of rotation when they change from their passive state (Ep) to their active state (Ea) of protection.

4. Device for protection of pedestrians according to Claim 2 or 3, **characterised in that** electrically deactivated locking means (207) are interposed between the support (204) and the carrying arm (202), so as to be able selectively to prevent or allow the pivoting of the carrying arm (202) with respect to the support (204).

5. Device for protection of pedestrians according to Claim 4, **characterised in that** the locking means (207) are of the type comprising a locking pin passing at least partly through the support (204) and the carrying arm (202), said pin being ejectable by igniting an electrically controlled pyrotechnic charge.

6. Device for protection of pedestrians according to Claim 4 or 5, **characterised in that** the linking means (202, 204, 205) between the bonnet (1) and the carrying arm (202) comprise actuation means (205) interposed between the support (204) and the carrying arm (202) in order to cause the carrying arm (202) to pivot with respect to the support (204), while raising the rear portion of the bonnet (1) when the locking means (207) are deactivated.

7. Device for protection of pedestrians according to Claim 6, **characterised in that** the actuation means are constituted by a helical spring, the ends of which co-operate in a state of stress with the carrying arm (202) and the support (204).

8. Device for protection of pedestrians according to Claim 6, **characterised in that** the actuation means are constituted by a leaf spring co-operating in a state of stress with the support (204) and the carrying arm (202).

9. Device for protection of pedestrians according to any one of the preceding claims, **characterised in that** the lock (9) of the mechanism for opening the front portion of the bonnet (1) is shaped in order to allow the longitudinal displacement and/or lowering of the front portion of the bonnet (1) relative to the structure (3) of the vehicle when the bonnet (1) rotates about the secondary axis (224).

10. Device for protection of pedestrians according to Claim 9, **characterised in that** the lock (9) of the mechanism for opening the front portion of the bonnet
(1) comprises a generally hook-shaped bolt (91) capable of capturing a generally wire-shaped striker (92) in a passage (94) delimited by the hook and, if appropriate, by an element (93) adjacent to the hook, this wire comprising a substantially longitudinal hooking portion relative to the vehicle so as to be able to slide within said passage (94) in this longitudinal direction, the bolt (91) and the striker (92) being fixed respectively to the structure (3) and the bonnet (1) of the vehicle or vice versa.

11. Device for protecting pedestrians according to any one of the preceding claims, **characterised in that** means for detecting a pedestrian impact are provided in the front portion of the vehicle and communicate with processing means and means for controlling the linking means (202, 204, 205) ensuring the fixing of the bonnet (1) to the carrying arm (202).

## Patentansprüche

1. Vorrichtung zum Schutz von Fußgängern bei einem Frontalzusammenstoß mit einem Kraftfahrzeug, wobei Letzteres eine Motorhaube (1) aufweist, die in ihrem hinteren Abschnitt von mindestens einem Tragarm (202) verlängert wird, der um eine Hauptachse (223), die senkrecht zur Längsrichtung des Fahrzeugs verläuft, drehbar am Aufbau (3) des Fahrzeugs montiert ist, wobei Verbindungsmittel (202, 204, 205) für die Befestigung der Motorhaube (1) an einem vorderen Abschnitt des Tragarms (202) sorgen, **dadurch gekennzeichnet, dass** die Verbindungsmittel elektrisch so gesteuert werden können, dass sie sich wahlweise in einem passiven Schutzzustand (Ep), in dem die Freiheitsgrade zwischen der Motorhaube (1) und dem Tragarm (202) null sind, oder in einem aktiven Schutzzustand (Ea) befinden, in dem die Verbindungsmittel (202, 204, 205) eine Drehung der Motorhaube (1) gegenüber dem Tragarm (202) um eine sekundäre Achse (224) bewirken, die im Wesentlichen parallel zur Hauptachse (223) und von dieser beabstandet weiter vorne am Fahrzeug angeordnet ist, und **dadurch**, dass die Hauptachse (223) hinter den unteren Enden der seitlichen Fensterholme des Fahrzeugs angeordnet ist.

2. Vorrichtung zum Schutz von Fußgängern nach Anspruch 1, **dadurch gekennzeichnet, dass** die Verbindungsmittel (202, 204, 205) zwischen der Motorhaube (1) und dem Tragarm (202) einen Träger (204) umfassen, der starr an der Motorhaube (1) befestigt und an einem vorderen Abschnitt des Tragarms (202) um die sekundäre Drehachse (224) angelenkt ist.

3. Vorrichtung zum Schutz von Fußgängern nach Anspruch 2, **dadurch gekennzeichnet, dass** die Verbindungsmittel (202, 204, 205) so ausgebildet sind, dass sie die sekundäre Drehachse (224) anheben, wenn sie von ihrem passiven Schutzzustand (Ep) in ihren aktiven Schutzzustand (Ea) wechseln.

4. Vorrichtung zum Schutz von Fußgängern nach Anspruch 2 oder 3, **dadurch gekennzeichnet, dass** die elektrisch deaktivierbaren Verriegelungsmittel (207) zwischen dem Träger (204) und dem Tragarm (202) derart angeordnet sind, dass sie das Verschwenken des Tragarms (202) in Bezug auf den Träger (204) wahlweise verhindern oder zulassen können.

5. Vorrichtung zum Schutz von Fußgängern nach Anspruch 4, **dadurch gekennzeichnet, dass** die Verriegelungsmittel (207) einen Blockierstift aufweisen, der den Träger (204) und den Tragarm (202) zumindest teilweise durchläuft und durch elektrisch gesteuertes Zünden einer pyrotechnischen Ladung ausgeworfen werden kann.

6. Vorrichtung zum Schutz von Fußgängern nach Anspruch 4 oder 5, **dadurch gekennzeichnet, dass** die Verbindungsmittel (202, 204, 205) zwischen der Motorhaube (1) und dem Tragarm (202) Betätigungsmittel (205) zwischen dem Träger (204) und dem Tragarm (202) umfassen, die das Verschwenken des Tragarms (202) in Bezug auf den Träger (204) und dabei das Anheben des hinteren Abschnitts der Motorhaube (1) bewirken, wenn die Verriegelungsmittel (207) deaktiviert werden.

7. Vorrichtung zum Schutz von Fußgängern nach Anspruch 6, **dadurch gekennzeichnet, dass** die Betätigungsmittel aus einer Schraubenfeder bestehen, deren Enden unter Beanspruchung mit dem Tragarm (202) und dem Träger (204) zusammenwirken.

8. Vorrichtung zum Schutz von Fußgängern nach Anspruch 6, **dadurch gekennzeichnet, dass** die Betätigungsmittel aus einer Blattfeder bestehen, die unter Beanspruchung mit dem Träger (204) und dem Tragarm (202) zusammenwirkt.

9. Vorrichtung zum Schutz von Fußgängern nach einem der vorhergehenden Ansprüche, **dadurch gekennzeichnet, dass** die Verschlussvorrichtung (9) des Mechanismus zum Öffnen des vorderen Abschnitts der Motorhaube (1) so ausgebildet ist, dass sie bei der Drehung der Motorhaube (1) um die sekundäre Achse (224) die Längs- und/oder Abwärtsbewegung des vorderen Abschnitts der Motorhaube (1) gegenüber dem Aufbau (3) des Fahrzeugs erlaubt.

10. Vorrichtung zum Schutz von Fußgängern nach Anspruch 9, **dadurch gekennzeichnet, dass** die Verschlussvorrichtung (9) des Mechanismus zum Öffnen des vorderen Abschnitts der Motorhaube (1) einen Riegel (91) von der allgemeinen Form eines Hakens umfasst, der eine Schließklappe (92) von der allgemeinen Form eines Drahtes in einem Durchgang (94) einschließen kann, welcher vom Haken und eventuell einem daran angrenzenden Element (93) festgelegt wird, wobei der Draht einen Einhängeabschnitt umfasst, der im Wesentlichen längs zum Fahrzeug verläuft, sodass er sich im Durchgang (94) in dieser Längsrichtung bewegen kann, und wobei der Riegel (91) und die Schließklappe (92) am Aufbau (3) beziehungsweise an der Motorhaube (1) des Fahrzeugs montiert sein können oder umgekehrt.

11. Vorrichtung zum Schutz von Fußgängern nach einem der vorhergehenden Ansprüche, **dadurch gekennzeichnet, dass** Mittel zum Erfassen eines Aufpralls eines Fußgängers im vorderen Abschnitt des Fahrzeugs vorgesehen sind und mit einer Datenverarbeitungs- und Steuereinrichtung der Verbindungsmittel (202, 204, 205) in Verbindung stehen, die für die Befestigung der Motorhaube (1) am Tragarm (202) sorgen.
